# EUROPÄISCHE PATENTSCHRIFT

(11) **EP 1 003 822 B1**
(45) Veröffentlichungstag und Bekanntmachung des Hinweises auf die Patenterteilung: **12.09.2001**
(21) Anmeldenummer: 98943784.3
(22) Anmeldetag: 25.07.1998
(51) Int. Cl.: C10G 33/04

(54) **VERFAHREN ZUR SPALTUNG VON EMULSIONEN**
METHOD FOR DEMULSIFYING EMULSIONS
PROCEDE DE RUPTURE D'EMULSIONS

(30) Priorität: 06.08.1997 DE 19733977
(43) Veröffentlichungstag der Anmeldung: 31.05.2000
(73) Patentinhaber: Cognis Deutschland GmbH, 40589 Düsseldorf (DE)
(72) Erfinder: PODUBRIN, Stefan, D-45481 Mülheim (DE); BREUER, Wolfgang, D-41352 Korschenbroich (DE); HEROLD, Claus-Peter, D-40822 Mettmann (DE); HEIDBREDER, Andreas, D-40593 Düsseldorf (DE); FÖRSTER, Thomas, D-40699 Erkrath (DE); HOLLENBROCK, Martina, D-40599 Düsseldorf (DE)
(86) Internationale Anmeldenummer: EP9804668
(87) Internationale Veröffentlichungsnummer: WO9907808

(56) Entgegenhaltungen:
- DE-A- 3 923 394
- DE-A- 4 317 046
- US-A- 3 061 620
- US-A- 3 066 159

## Beschreibung

Gegenstand der vorliegenden Anmeldung ist ein Verfahren zur Spaltung von Wasser und Öl enthaltenden Emulsionen, vorzugsweise von wäßrigen Rohölemulsionen.

Bei der Förderung von Rohölen wird mit zunehmender Ausbeutung der Lagerstätte ein steigender Anteil an Wasser mitgefördert. In den Rohölen enthaltene, oberflächenaktive Substanzen (z.B. Asphaltene und Harze) emulgieren den größten Teil des Wassers, wobei sich sehr stabile Wasser-in-Öl-Emulsionen bilden. Das emulgierte Wasser kann einen Anteil von 0,1 bis 90 Gew.-% der Gesamtemulsion ausmachen. Im Emulsionswasser können Salze gelöst sein, die bei der Verarbeitung des Rohöls zu Korrosionsproblemen führen oder als Katalysatorgifte die Weiterverarbeitung erschweren können. Außerdem führt der Wasseranteil im Rohöl zu erhöhten Transportkosten.

Die Rohöle unterscheiden sich je nach ihrer Herkunft deutlich in ihrer Zusammensetzung. Außerdem weisen die in den Rohölen enthaltenen natürlichen Emulgatoren teilweise eine komplexe chemische Zusammensetzung auf, so daß speziell ausgewählte Emulsionsspalter oder Demulgatoren eingesetzt werden müssen.
Als Demulgatoren für wäßrige Rohölemulsionen werden eine Vielzahl von unterschiedlichen Verbindungen allein oder in Mischungen eingesetzt, beispielsweise Polyamine, Alkylarylsulfonate oder Phenolharze (Kim Y.H.. Wasan D.T., Ind. Eng. Chem. Res. 1996, 35, 1141-1149). Die DE 44 18 800 A1 beansprucht die Verwendung von Mischungen aus bekannten Demulgatoren mit Polyalkylenglykolethern zur Abtrennung von Wasser aus Rohöl. Die EP 751 203 A2 schlägt Polymere als Demulgatoren vor, die durch Reaktion bestimmter alkoxylierter Polyole mit reaktive Gruppen enthaltenden Aromaten erhalten werden. Die US 3,928,194 beschreibt eine Vielzahl von Substanzklassen als Demulgatoren für wäßrige Rohölemulsionen, beispielsweise Glykolester, Fettsäuren, Fettsäureester, Amine, Phenolharze und deren alkoxylierten Derviate.

Die bekannten Demulgatoren bzw. Demulgatorengemische genügen aber nicht immer den Anforderungen, da die Trennung von Wasser- und Ölphase entweder eine zu lange Zeitspanne beansprucht oder eine zu hohe Dosierung des Spalters erfordert. Weiterhin besteht aufgrund der sehr unterschiedlichen Zusammensetzung der Rohöle ständig Bedarf an verbesserten bzw. an spezielle Rohölqualitäten angepaßte Demulgatoren.

Die Aufgabe der vorliegenden Anmeldung war es daher, verbesserte Demulgatoren zur Spaltung von Wasser-in-Öl-Emulsionen bereitzustellen. Diese sollten insbesondere bei der Spaltung von wäßrigen Rohölemulsionen einsetzbar sein.

Es wurde gefunden, daß sich Wasser und Öl enthaltende Emulsionen hervorragend spalten lassen, indem man den Emulsionen als Demulgatoren ausgewählte Alkoxylierungsprodukte von Carbonsäureestern zugibt.

Gegenstand der Erfindung ist daher ein Verfahren zur Spaltung von Wasser und Öl enthaltenden Emulsionen in eine Wasser- und eine Ölphase durch Zugabe eines Demulgators, wobei als Demulgatoren Anlagerungsprodukte von Ethylenoxid und/oder Propylenoxid an OH-Gruppen-haltige C₁₀₋₂₄-Carbonsäureestern eingesetzt werden.

Das erfindungsgemäße Verfahren eignet sich generell zur Spaltung von Wasser und Öl enthaltenden Emulsionen. Dabei kann es sowohl für Emulsionen des Typs Öl-in-Wasser als auch Wasser-in-Öl eingesetzt werden. Bevorzugt wird das Verfahren aber zur Trennung von wäßrigen Rohölemulsionen eingesetzt, also von Wasser-in-Öl-Emulsionen, deren Ölphase ganz oder überwiegend Röhöl enthält.

Die erfindungsgemäß als Demulgatoren eingesetzten Ester sind bekannt und werden z.B. in der DE 3923394 A1 beschrieben deren Offenbarung auch Teil der vorliegenden Anmeldung ist.

Die erfindungsgemäß verwendeten Demulgatoren können nach gängigen organischen Synthesemethoden hergestellt werden, z.B. aus den Epoxiden ungesättigter Öle, die mit geeigneten Reagenzien ringgeöffnet und anschließend mit Ethylenoxid und/oder Propylenoxid umgesetzt werden.
Als Edukte eignen sich vorzugsweise alle OH-Gruppen-freien, ungesättigten C₁₀₋₂₄-Carbonsäuren natürlichen und/oder synthetischen Ursprungs mit wenigstens einer oder zwei Doppelbindungen in 9- und/oder 13-Stellung, beispielsweise 9c-Dodecensäure, 9c-Tetradecensäuren, 9c-Hexadecensäure, 9c-Octadecensäure, 9t-Octadecensäure, 9c-, 12c-Octadecadiensäure, 9c-, 12c-, 15c-Octadecatriensäure, 9c-Eicosensäure und/oder 13c-Docosedensäure und/oder Mischungen mit wenigstens einem hohen Gehalt solcher ungesättigten Carbonsäuren. Als Edukte werden vorzugsweise Carbonsäuren mit 16 bis 24 C-Atomen und wenigstens einer oder zwei Doppelbindungen in 9- und/oder 13-Stellung oder Carbonsäuregemische mit wenigstens einem hohen Gehalt an Carbonsäuren, die 16 bis 24 C-Atome und wenigstens eine oder zwei Doppelbindungen in 9- und/oder 13-Stellung haben, eingesetzt. Diese können z.B. nach gängigen Synthesemethoden mit Alkoholen verestert werden. Im Sinne der vorliegenden Anmeldung sind solche C₁₀₋₂₄-Carbonsäureester bevorzugt, die als Alkoholkomponente Polyole mit 2 bis 6 C-Atomen als Alkoholkomponente enthalten. Die Polyole enthalten zwischen 2 und 6 OH-Gruppen im Molekül. Beispiele für derartige Polyole sind Diethylenglykol, Pentaerythrit, Trimethylolpropan und Glycerin.
Es ist aber bevorzugt, natürlich vorkommende OH-Gruppen-freie, ungesättigte C₁₀₋₂₄-Carbonsäureester für die Herstellung der erfindungsgemäß eingesetzten Demulgatoren zu verwenden. Bevorzugt werden im erfindungsgemäßen Verfahren Demulgatoren auf Basis von C₁₀₋₂₄-Glycerinestern eingesetzt. Als ungesättigte C₁₀₋₂₄-Carbonsäureester auf Glycerinbasis eignen sich vorzugsweise alle Mono-, Di- oder Triglyceride, die wenigstens eine oder zwei Doppelbindungen in 9- und/oder 13-Stellung des C₁₀₋₂₄-Carbonsäureresters enthalten, insbesondere natürlich vorkommende Fette und Öle. deren Carbonsäuregehalt sich überwiegend aus ungesättigten C₁₀₋₂₄-Carbonsäuren mit wenigstens einer oder zwei Doppelbindungen in 9- und/oder 13-Stellung zusammensetzt. Beispiele für derartige natürlich vorkommende ungesättigte Glyceride sind Olivenöl, Leinöl, Sonnenblumenöl. Sojaöl, Safloröl, Erdnußöl, Baumwollsaatöl, Rüböl, Palmöl, Schmalz, Talg und Fischöl. Besonders bevorzugt sind Demulgatoren auf Basis von Sojaöl.

Die ungesättigten OH-Gruppen-freien C₁₀₋₂₄-Carbonsäureester werden nach bekannten Methoden, z.B. mit Persäuren oder Wasserstoffperoxid epoxidiert. Die Jodzahlen der erhaltenen Epoxidierungsprodukte liegen unterhalb 20, vorzugsweise unterhalb 15. Anschließend werden die Oxiranringe der epoxidierten C₁₀₋₂₄-Carbonsäureester durch Umsetzung mit Wasserstoff oder protischen Verbindungen, wie Wasser, gerad- oder verzweigtkettigen C₁₋₂₂-Alkyl- und/oder Alkenylalkoholen oder gerad- oder verzweigtkettigen und/oder ungesättigten C₁₋₂₄ Carbonsäuren, unter Ausbildung von Hydroxylgruppen aufgespalten. Bevorzugt werden zur Ringöffnung gesättigte unverzweigte C₆₋₁₈-Fettsäuren verwendet.

Die durch diese Aufspaltung der Oxiranringe erhältlichen OH-Gruppen-haltigen C₁₀₋₂₄-Carbonsäureester enthalten mindestens eine freie OH-Gruppe im Carbonsäurerest. Bevorzugt sind solche Verbindungen, die wenigstens in Stellung 9/10 oder 13/14 eine Struktureinheit der allgemeinen Formel (I) 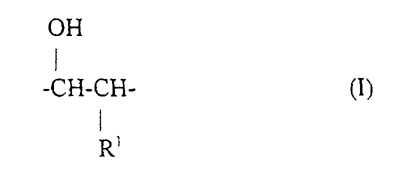 enthalten, in der R¹ ein Wasserstoffatom oder eine OH-Gruppe bedeutet. Wurden zur Spaltung der Oxiranringe Alkohole verwendet, steht R¹ für eine OR²-Gruppe, in der R² für eine Alkylgruppe mit 1 bis 22 C-Atomen oder eine Alkenylgruppe mit 2 bis 22 C-Atomen steht. Wurden C₁₋₂₄-Carbonsäuren zur Spaltung der Oxiranringe eingesetzt, steht R² für eine Gruppe COR³, wobei R³ für ein Wasserstoffatom, eine Alkylgruppe mit 1 bis 23 C-Atomen oder eine Alkylengruppe mit 2 bis 23 C-Atomen steht.

Die durch Aufspaltung der Oxiranringe erhaltenen OH-Gruppen-haltigen C₁₀₋₂₄-Carbonsäureester werden anschließend nach bekannten Verfahren mit Ethylenoxid und/oder Propylenoxid umgesetzt. Die im erfindungsgemäßen Verfahren als Demulgatoren eingesetzten alkoxylierten Ester werden dabei vorzugsweise durch Anlagerung von 1,0 bis 2,5 Teilen Ethylenoxid und/oder Propylenoxid auf einen Teil des nichtoxalkylierten Esters erhalten. Besonders bevorzugt sind Anlagerungsprodukte von 1,5 bis 1,8 Teilen Ethylenoxid und/oder Propylenoxid an einen Teil Ester. Vorzugsweise werden im erfindungsgemäßen Verfahren solche Ester eingesetzt, die nur mit Ethylenoxid umgesetzt wurden.
Für den Einsatz als Demulgator im erfindungsgemäßen Verfahren eignen sich insbesondere solche Ester, die durch Anlagerung von Ethylenoxid und/oder Propylenoxid an mit C₆₋₁₈-Carbonsäuren ringeöffneten epoxidierten C₁₀₋₂₄-Carbonsäuretriglyceriden, insbesondere Sojaölepoxiden, erhalten werden.

Die Emulsionen werden erfindungsgemäß gespalten, indem man der Emulsion die Demulgatoren in ausreichender Mengen zugibt, üblicherweise sind das zwischen 5 und 1000 ppm Aktivsubstanz, bezogen auf die Gesamtmenge der Emulsion. Diese trennen sich dann in der Regel nach kurzer Zeit, d.h. zwischen 10 und 60 Minuten, von selbst in eine wäßrige und eine Ölphase. Die Temperatur der Emulsion kann zwischen 0 und 100 °C liegen. Bei der Spaltung von Rohölemulsionen kann der Demulgator dem Rohöl bereits im Feld zugegeben werden. Die Spaltung verläuft dann in der Regel bereits bei der Fördertemperatur des Öls ausreichend schnell, um die Emulsion auf dem Weg zur Aufbereitungsanlage zu brechen. Sie wird dort in einem gegebenenfalls beheizten Abscheider in Reinöl und Salzwasser getrennt. Die Spaltung der Emulsion nach Zugabe der Demulgatoren kann durch Rühren der Emulsion beschleunigt werden.

Um die Dosierbarkeit der Demulgatoren zu verbessern, können diese auch als Lösung in geeigneten Lösungsmitteln eingesetzt werden. Als Lösungsmittel eignen sich generell organische Verbindungen, mit Siedetemperaturen zwischen 50 und 200 °C, wie z.B. Methanol. Besonders geeignet sind aromatische Verbindungen wie Toluol oder Xylol oder die von der Firma Esso unter dem Markennamen Solvesso® vertriebenen Mischungen von Alkylnaphthalinen. Im Falle der Verwendung der Demulgatoren in gelöster Form ist es vorteilhaft, Lösungen, die zwischen 0,5 und 50 Gew.-%, vorzugsweise zwischen 10 und 40 Gew.-% des Demulgators enthalten, zur Emulsionsspaltung einzusetzen.

### Beispiele

### Beispiel 1: Herstellung des Demulgators

### Beispiel 1a:

Zu 1225 g (7,9 mol) Vorlauffettsäure (60 % C₈, 35 % C₁₀, SZ = 361,9) werden bei 150°C unter Rühren binnen einer Stunde 1770 g (7,5 mol bezogen auf Epoxid-Sauerstoff) Sojaölepoxid (Epoxid-Sauerstoff = 6,78 %) zugesetzt und anschließend zwei Stunden bei 170°C nachreagiert (Epoxid-Sauerstoff < 0,15 %). Zur Entfernung des Fettsäureüberschusses wird im Vakuum bis auf 200°C Sumpftemperatur andestilliert (469 g Destillat). Das Zwischenprodukt ist ein gelbes, klares Polyol (Viskosität = 5550 mPas (20°C): OHZ 105, VZ = 236, SZ = 3,1). 423 g (39 Teile) dieses Zwischenproduktes werden mit 6,9 g einer 30%igen methanolischen Kaliumhydroxid-Lösung in einem Autoklaven auf 100°C erhitzt und das Methanol durch 5-maliges Evakuieren und Belüften mit Stickstoff als Schutzgas entfernt. Anschließend werden bei 150°C portionsweise insgesamt 660 g (61 Teile) Ethylenoxid zudosiert, so daß der Druck 5 bar nicht übersteigt. Nach Beendigung der Reaktion wird auf 80 bis 100°C abgekühlt, zur Entfernung der Ethylenoxidspuren ca. 15 Minuten evakuiert und der Katalysator mit Milchsäure neutralisiert. Auf diese Weise erhält man eine klare gelbe Flüssigkeit mit einer OHZ von 54.7.

### Beispiel 1b:

Ein weiteres alkoxyliertes Polyol wurde gemäß der Vorschrift des Beispiels 1a hergestellt, indem 350 g (70 Teile) des Zwischenproduktes mit 150 g (30 Teile) Ethylenoxid umgesetzt wurden. OHZ = 86

### Beispiel 2: Bestimmung der Demulgierwirkung

90g Rohöl (Arabian light) wurden mit 10 g Leitungswasser vermischt und dann mit 49.9 ppm (Aktivsubstanz) Demulgator versetzt, geschüttelt und anschließend die Demulgierwirkung gemessen.
Zur Messung der Demulgierwirkung wurden bei Raumtemperatur Sedimentationsprofile über 40 Minuten gemessen. Gemessen wurde jeweils die Menge an freiem Wasser (in Gew.-% bezogen auf Gesamtmenge der Emulsion) nach 10 und 40 Minuten, sowie die Transparenz der Wasserphase.
Die Demulgatoren wurden jeweils vorab in Solvesso® 150 (Alkylnapthalinmischung der Fa. Esso) vorgelöst und anschließend mit Toluol zu einer 10 Vol.-%igen Lösung verdünnt und diese Lösung dann der Emulsion zudosiert. Die Ergebnisse sind der Tabelle 1 zu entnehmen:

### Eingesetzte Demulgatoren:

- A: Dehydem 2F Polyalkylphenol-formaldehydethoxylat (Fa. Henkel)
- B: Dehypon LT7 C₁₂₋₁₄-Fettalkohol + 7 EO (Fa. Henkel)
- c: Alkoxylierter Ester gemäß Beispiel 1b
- D: Alkoxylierter Ester gemäß Beispiel 1a

**Tabelle 1:**

| Demulgator | Anteil an freiem Wasser nach 10 und 40 Minuten* [Gew.-%] | Transparenz der Wasserphase nach 10 und 40 Minuten**[%] |
|---|---|---|
| A | 0/8 | -/30 |
| B | *-/-* | *-/-* |
| C | 0/7 | -/37 |
| D | 2/10 | 2/45 |

| | | |
|---|---|---|
| * maximal 10 Gew.-% | | |
| ** 100 % Transparenz entspricht reinem Wasser | | |

Es wird deutlich, daß nur die Verwendung der erfindungsgemäßen Verbindung D zu einer sowohl schnellen als auch vollständigen Trennung der Rohölemulsionen führt.

## Patentansprüche

1. Verfahren zur Spaltung von Wasser und Öl enthaltenden Emulsionen in eine Wasser- und eine Ölphase durch Zugabe eines Demulgators, **dadurch gekennzeichnet, daß** als Demulgator Anlagerungsprodukte von Ethylenoxid und/oder Propylenoxid an OH-Gruppen-haltige C₁₀₋₂₄-Carbonsäureester eingesetzt werden.

2. Verfahren nach Anspruch 1, **dadurch gekennzeichnet**. daß als Demulgator ein Anlagerungsprodukt von 1,0 bis 2,5 Gewichtsteilen Ethylenoxid und/oder Propylenoxid an ein Gewichtsteil des OH-Gruppen-haltigen C₁₀₋₂₄-Carbonsäureesters eingesetzt wird.

3. Verfahren nach Anspruch 1 oder 2, **dadurch gekennzeichnet, daß** als Demulgator ein Anlagerungsprodukt von 1,5 bis 1,8 Gewichtsteilen Ethylenoxid und/oder Propylenoxid an ein Gewichtsteil des OH-Gruppen-haltigen C₁₀₋₂₄-Carbonsäureesters eingesetzt wird.

4. Verfahren nach einem der Ansprüche 1 bis 3, **dadurch gekennzeichnet, daß** die OH-Gruppen-haltigen C₁₀₋₂₄-Carbonsäureester als Alkoholkomponente Polyole mit 2 bis 6 C-Atomen enthalten.

5. Verfahren nach Anspruch 1 bis 4, **dadurch gekennzeichnet, daß** die OH-Gruppen-haltigen C₁₀₋₂₄-Carbonsäureester als Alkoholkomponente Glycerin enthalten.

6. Verfahren nach einem der Ansprüche 1 bis 5, **dadurch gekennzeichnet, daß** die C₁₀₋₂₄-Carbonsäureester wenigstens in Stellung 9/10 oder 13/14 eine Struktureinheit der allgemeinen Formel (I) 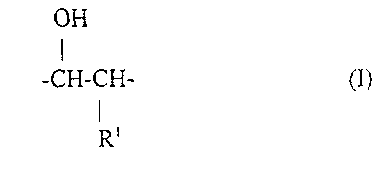 enthalten, in der R¹ ein Wasserstoffatom, oder eine OH-Gruppe oder eine OR²-Gruppe bedeutet, R² eine Alkylgruppe mit 1 bis 23 C-Atomen, eine Alkenylgruppe mit 2 bis 24 C-Atomen oder eine Gruppe COR³ bedeutet und R³ für ein Wasserstoffatom, eine Alkylgruppe mit 1 bis 23 C-Atomen oder eine Alkylengruppe mit 2 bis 23 C-Atomen steht.

7. Verfahren nach einem der Ansprüche 1 bis 6, **dadurch gekennzeichnet, daß** Demulgatoren eingesetzt werden, die durch Anlagerung von Ethylenoxid und/oder Propylenoxid an mit C₆₋₁₈-Carbonsäuren ringeöffneten epoxidierten C₁₀₋₂₄-Carbonsäuretriglyceriden erhalten werden.

8. Verfahren nach einem der Ansprüche 1 bis 7, **dadurch gekennzeichnet, daß** die Emulsion als Ölphase Rohöl enthält.

9. Verfahren nach einem der Ansprüche 1 bis 8, **dadurch gekennzeichnet, daß** der Demulgator den Emulsionen in Mengen von 5 bis 1000 ppm Aktivsubstanz zugegeben wird.

## Claims

1. A process for breaking emulsions containing water and oil into a water phase and an oil phase by addition of a demulsifier, **characterized in that** products of the addition of ethylene oxide and/or propylene oxide onto C₁₀₋₂₄ carboxylic acid esters containing OH groups are used as demulsifiers.

2. A process as claimed in claim 1, **characterized in that** an addition product of 1.0 to 2.5 parts by weight of ethylene oxide and/or propylene oxide with 1 part by weight of the OH-containing C₁₀₋₂₄ carboxylic acid ester is used as the demulsifier.

3. A process as claimed in claim 1 or 2, **characterized in that** an addition product of 1.5 to 1.8 parts by weight of ethylene oxide and/or propylene oxide with 1 part by weight of the OH-containing C₁₀₋₂₄ carboxylic acid ester is used as the demulsifier.

4. A process as claimed in any of claims 1 to 3, **characterized in that** the OH-containing C₁₀₋₂₄ carboxylic acid esters contain C₂₋₆ polyols as their alcohol component.

5. A process as claimed in claims 1 to 4, **characterized in that** the OH-containing C₁₀₋₂₄ carboxylic acid esters contain glycerol as their alcohol component.

6. A process as claimed in any of claims 1 to 5, **characterized in that**, in the 9/10 or 13/14 position at least, the C₁₀₋₂₄ carboxylic acid esters contain a structural unit corresponding to general formula (I): 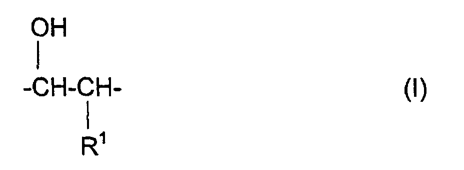 in which R¹ is a hydrogen atom or an OH group or an OR² group, where R² is an alkyl group containing 1 to 23 carbon atoms, an alkenyl group containing 2 to 24 carbon atoms or a group COR³ where R³ is a hydrogen atom, an alkyl group containing 1 to 23 carbon atoms or an alkylene group containing 2 to 23 carbon atoms.

7. A process as claimed in any of claims 1 to 6, **characterized in that** demulsifiers obtained by addition of ethylene oxide and/or propylene oxide onto epoxidized C₁₀₋₂₄ carboxylic acid triglycerides ring-opened with C₆₋₁₈ carboxylic acids are used.

8. A process as claimed in any of claims 1 to 7, **characterized in that** the emulsion contains crude oil as its oil phase.

9. A process as claimed in any of claims 1 to 8, **characterized in that** the demulsifier is added to the emulsions in quantities of 5 to 1,000 ppm active substance.

## Revendications

1. Procédé de rupture d'émulsions contenant de l'eau et de l'hulle en une phase aqueuse et une phase huileuse, par addition d'un agent désémulsionnant,
**caractérisé en ce que**
comme agent désémulsionnant on met en oeuvre des produits d'addition d'oxyde d'éthylène et/ou d'oxyde de propylène sur des esters d'acide carboxylique en C₁₀-C₂₄ contenant des groupes OH.

2. Procédé selon la revendication 1,
**caractérisé en ce que**
comme agent désémulsionnant on met en oeuvre un produit d'addition de 1,0 à 2,5 parties en poids d'oxyde d'éthylène et/ou d'oxyde de propylène sur une partie en poids d'ester d'acide carboxylique en C₁₀-C₂₄, contenant des groupes OH.

3. Procédé selon l'une quelconque des revendications 1 ou 2,
**caractérisé en ce que**
comme agent désémulsionnant on met en oeuvre un produit d'addition de 1,5 à 1,8 parties en poids d'oxyde d'éthylène et/ou d'oxyde de propylène sur une partie en poids d'ester d'acide carboxylique en C₁₀-C₂₄ contenant des groupes OH.

4. Procédé selon l'une quelconque des revendications 1 à 3,
**caractérisé en ce que**
les esters d'acide carboxylique en C₁₀-C₂₄ contenant des groupes OH, renferment comme composant alcool, des polyols ayant de 2 à 6 atomes de carbone.

5. Procédé selon l'une quelconque des revendications 1 à 4,
**caractérisé en ce que**
les esters d'acide carboxylique en C₁₀-C₂₄, contenant des groupes OH, renferment comme composant alcool, du glycérol.

6. Procédé selon l'une quelconque des revendications 1 à 5,
**caractérisé en ce que**
les esters d'acide carboxylique en C₁₀-C₂₄, contiennent au moins en position 9/10 ou 13/14, un élément de structure de formule générale (1) 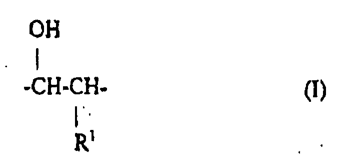 dans laquelle R¹ signifie un atome d'hydrogène ou un groupe OH ou un groupe OR², R² signifie un groupe alkyle ayant de 1 à 23 atomes de carbone, un groupe alkényle ayant de 2 à 24 atomes de carbone, ou un groupe COR³ et R³ représente un atome d'hydrogène, un groupe alkyle ayant de 1 à 23 atomes de carbone ou un groupe alkylène ayant de 2 à 23 atomes de carbone.

7. Procédé selon l'une quelconque des revendications 1 à 6,
**caractérisé en ce qu'**
on met en oeuvre des agents désémulsionnants qui sont obtenus par addition d'oxyde d'éthylène et/ou d'oxyde de propylène sur des triglycérides d'acide carboxylique en C₁₀-C₂₄, époxydés, dont le cycle a été ouvert par des acides carboxyliques en C₆-C₁₈.

8. Procédé selon l'une quelconque des revendications 1 à 7,
**caractérisé en ce que**
l'émulsion renferme comme phase huileuse, du pétrole brut.

9. Procédé selon l'une quelconque des revendications 1 à 8,
**caractérisé en ce que**
l'agent désémulsionnant est ajouté aux émulsions en quantités allant de 5 à 1000 ppm de substance active.
